# EUROPEAN PATENT SPECIFICATION

(11) **EP 3 482 654 B1**
(45) Date of publication and mention of the grant of the patent: **05.08.2020**
(21) Application number: 17201393.0
(22) Date of filing: 13.11.2017
(51) Int. Cl.: A47B 96/02, F16B 12/08, A47F 5/00

(54) **POSITIONING STRUCTURE OF FRAME WELDING ASSEMBLY FOR METAL PRODUCT**
POSITIONIERUNGSSTRUKTUR EINER RAHMENSCHWEISSANLAGE FÜR METALLPRODUKTE
STRUCTURE DE POSITIONNEMENT D'UN ENSEMBLE DE SOUDAGE DE CADRE POUR PRODUIT MÉTALLIQUE

(43) Date of publication of application: 15.05.2019
(73) Proprietor: Wire Master Industry Co., Ltd., Changhua County (TW)
(72) Inventor: Cheng, Hsi-Ming, Changhua County (TW)
(74) Representative: Lang, Christian

(56) References cited:
- WO-A2-2007/118805
- GB-A- 1 033 795
- NL-A- 7 204 417
- US-A- 2 568 148
- US-A1- 2017 231 383

## Description

### FIELD OF THE INVENTION

The present invention relates to a positioning structure of a frame welding assembly for a metal product (such as a holding plate or a holding basket made of metal mesh) in which multiple recesses retain with multiple protrusions individually before welding, and two adjacent body portions are high-frequency welded together so as to obtain aesthetic welding appearance.

### BACKGROUND OF THE INVENTION

From document WO 2007/118805 A2 a positioning structure for holding a support plate is known, the positioning structure being a frame formed from extruded profiled pieces and profiled parts, wherein the profiled parts connect the ends of the extruded profiled pieces. In other words, said frame includes multiple bodies that are connected by recession and protrusion engagement.

A conventional metal shelf contains holding plates or holding baskets made of metal meshes individually, and the metal meshes are stamped, folded, and flexible. Nevertheless, it is dangerous to injure user or other objects because of sharp edges of the metal meshes. To enhance aesthetic appearance and using safety, peripheral sides of the holding plates or the holding baskets are covered respectively, i.e., the edges of the metal meshes are hidden. Each of the holding plates or the holding baskets contains peripheral sides folded from a metal sheet, and two connection ends of two adjacent holding plates or holding baskets are welded together, wherein each of the metal meshes has peripheral ribs folded and coupled with each holding plate or holding basket.

However, two connection ends of the two adjacent holding plates or holding baskets are straight, so offset misalignment occurs after welding the two adjacent holding plates or holding baskets together. In addition, welding raised tracks form on the two connection ends of the two adjacent holding plates or holding baskets to cause poor quality and appearance.

The present invention has arisen to mitigate and/or obviate the afore-described disadvantages.

### SUMMARY OF THE INVENTION

The primary objective of the present invention is to provide a positioning structure of a frame welding assembly for a metal product according to claim 1 which improves offset misalignment of conventional holding plate or a holding basket made of metal mesh as welding two adjacent body portions together so as to avoid welding scars and poor appearance.

The present invention provides a positioning structure of a frame welding assembly for a metal product which contains multiple protrusions and multiple recesses formed on the connection sides of two adjacent body portions, wherein when the two adjacent body portions are connected together, the multiple recesses individually retain the multiple protrusions, and the two adjacent body portions are high-frequency welded together to obtain welding quality and aesthetic welding appearance, wherein a height of each of the multiple protrusions can be more than a depth of each of the multiple recesses.

According to the present invention a positioning structure of a frame welding assembly for a metal product is provided in which the multiple recesses retain with the multiple protrusions individually before welding the two adjacent body portions, and a slit is defined between the two adjacent body portions so as to avoid offset misalignment as welding the two adjacent body portions together, thus obtaining welding quality and aesthetic welding appearance.

### BRIEF DESCRIPTION OF THE DRAWINGS

FIG. 1 is a perspective view showing the assembly of a positioning structure of a frame welding assembly for a metal product according to a first embodiment of the present invention.
FIG. 2 is a perspective view showing the exploded components of a part of the positioning structure of the frame welding assembly for the metal product according to the first embodiment of the present invention.
FIG. 3 is a perspective view showing the assembly of a part of the positioning structure of the frame welding assembly for the metal product according to the first embodiment of the present invention.
FIG. 4 is a side plan view showing the assembly of a part of the positioning structure of the frame welding assembly for the metal product according to the first embodiment of the present invention.
FIG. 5 is another side plan view showing the assembly of a part of the positioning structure of the frame welding assembly for the metal product according to the first embodiment of the present invention.
FIG. 6 is a perspective view showing the exploded components of a part of the positioning structure of the frame welding assembly for the metal product according to a second embodiment of the present invention.
FIG 7 is a perspective view showing the assembly of a part of the positioning structure of the frame welding assembly for the metal product according to the second embodiment of the present invention.
FIG. 8 is a perspective view showing the assembly of a part of the positioning structure of the frame welding assembly for the metal product according to a third embodiment of the present invention.

### DETAILED DESCRIPTION OF THE PREFERRED EMBODIMENTS

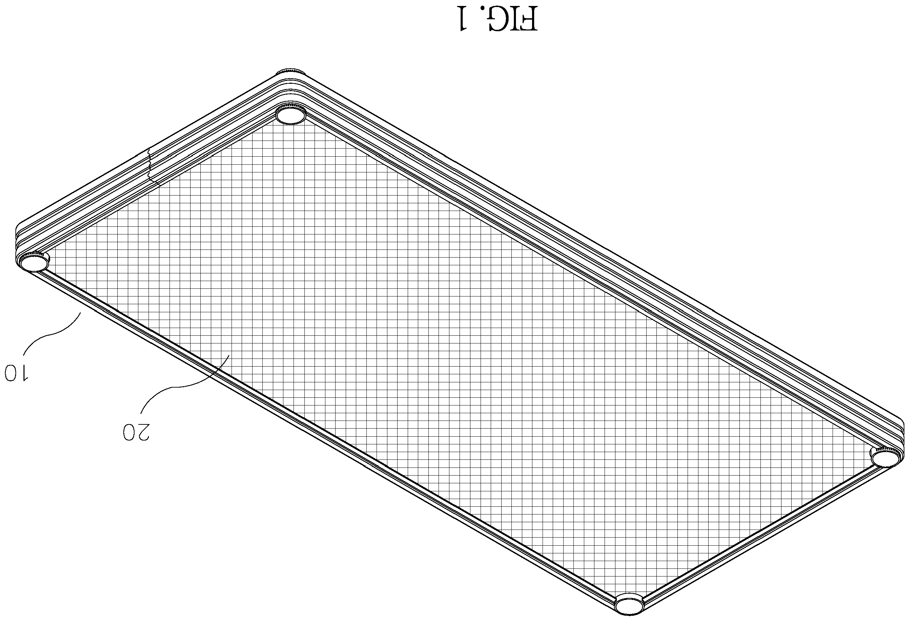

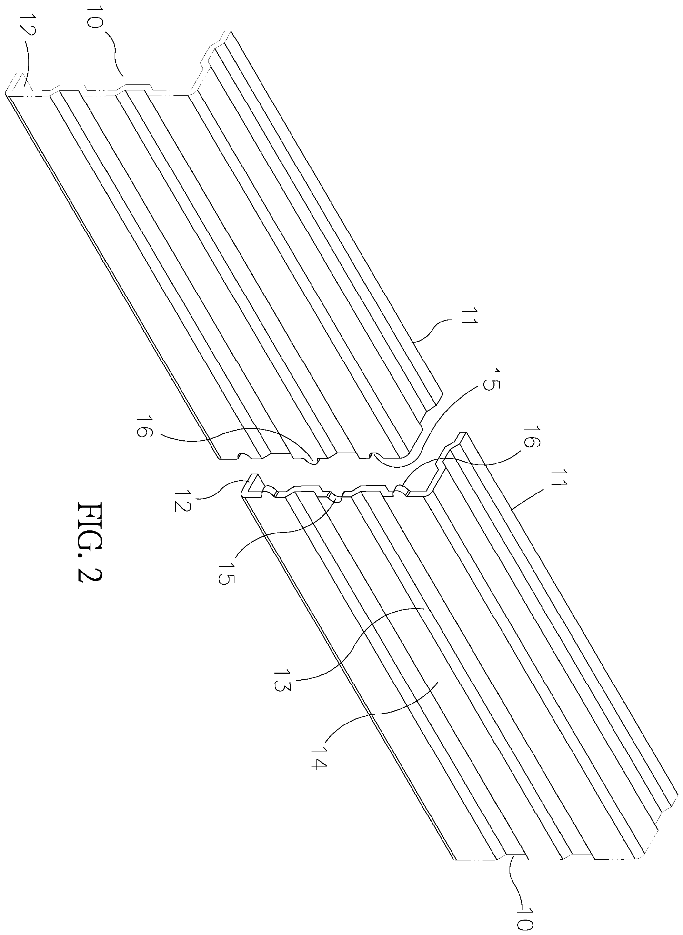

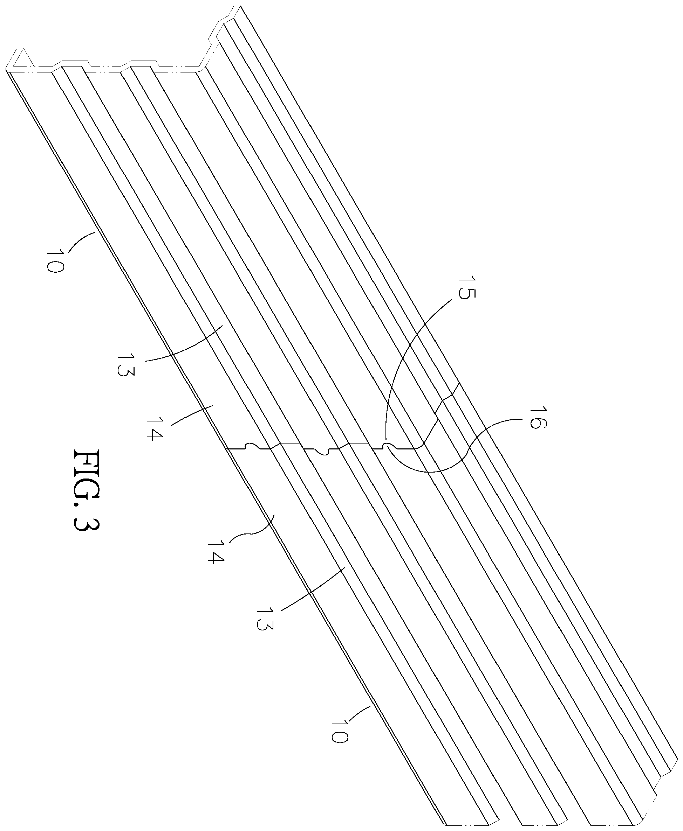

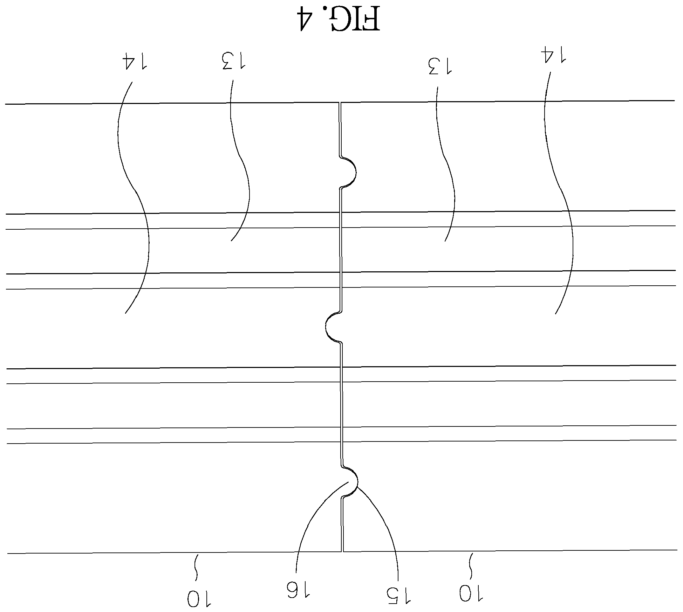

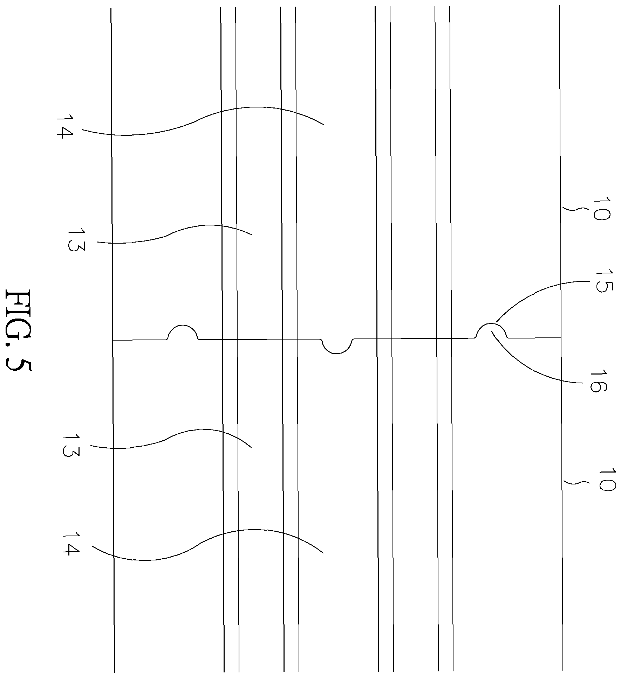

With reference to FIGS. 1-5, a positioning structure of a frame welding assembly according to a first embodiment of the present invention is applied to a holding plate of a metal shelf and comprises a body 10 stamped in a C shape from a metal sheet, the body 10 includes a first peripheral rib 11 formed on a first end thereof, a second peripheral rib 12 formed on a second end of the body 10, multiple slots 13 stamped on each of a peripheral side of the body 10, the first peripheral rib 11 and the second peripheral rib 12 respectively so as to reinforce the positioning structure, wherein the body 10 is folded in a square shape, and wherein the first peripheral rib 11 is welded with a metal mesh 20 made of metal material, thus producing the holding plate.

Before welding the sides of the body 10 with the metal mesh 20 so as to produce the holding plate, two adjacent body portions of the body 10 having multiple recesses 15 and multiple protrusions 16 formed on two connection sides of the two adjacent body portions 10 are defined. The multiple recesses 15 and the multiple protrusions 16 are alternatively formed on multiple raised faces 14 or the multiple slots 13 on peripheral sides of the two adjacent body portions 10, wherein a height of each of the multiple protrusions 16 is more than a depth of each of the multiple recesses 15 so that when the two adjacent body portions 10 are connected together, the multiple recesses 15 individually retain the multiple protrusions 16, and a slit is defined between the two adjacent body portions 10. Thereafter, the two adjacent body portions 10 are high-frequency welded together so that the multiple protrusions 16 partially melt and fill into the slit, thus obtaining aesthetic welding appearance.

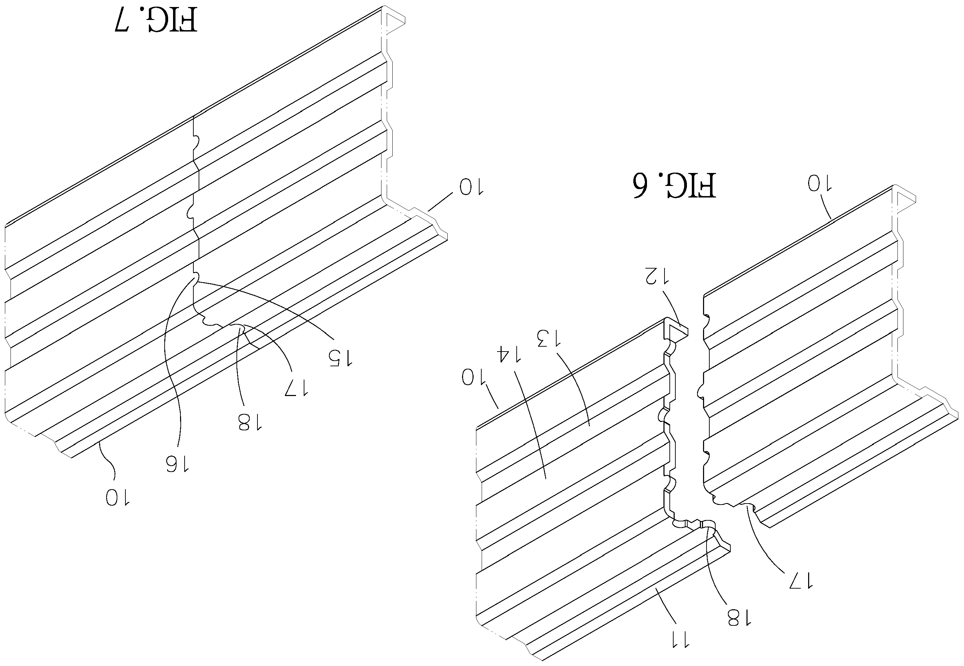

Referring further to FIGS. 6 and 7, a difference of a positioning structure of a frame welding assembly of a second embodiment from that of the first embodiment comprises: multiple notches 17 and multiple projections 18 formed on two first peripheral ribs 11 and two second peripheral ribs 12 of the two adjacent body portions 10. Hence the two first peripheral ribs 11 and the two second peripheral ribs 12 of the two adjacent body portions 10 are retained and are high-frequency welded matingly so as to obtain secure connection and aesthetic welding appearance of the two adjacent body portions 10.

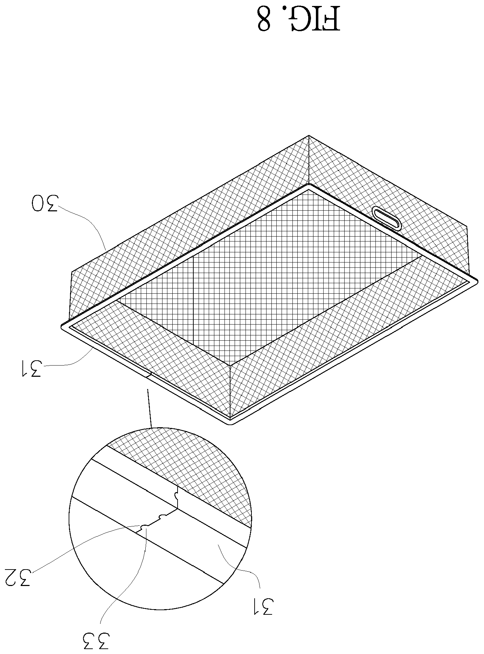

As shown in FIG. 8, a positioning structure of a frame welding assembly according to a third embodiment of the present invention is applied to a holding basket made from multiple metal meshes. The positioning structure comprises a body 30 folded and stamped from a metal sheet, the body 30 includes a peripheral rib 31 formed around a peripheral edge thereof, multiple notches 32 and multiple projections 33 which are formed on two connection ends of the peripheral rib 31 respectively, hence the multiple notches 32 and the multiple projections 33 of the peripheral rib 31 retain together individually. Thereafter, the two connection ends of the peripheral rib 31 are high-frequency welded so as to produce the holding basket at high quality.

Thereby, the two adjacent body portions of the positioning structure are connected together by retaining the multiple notches with the multiple projections respectively and in high-frequency welding manner, thus enhancing welding quality.

Furthermore, when the two adjacent body portions are connected together, the multiple recesses individually retain with the multiple protrusions, and the two adjacent body portions are high-frequency welded together so that the multiple protrusions partially melt and fill into the slit, thus obtaining aesthetic welding appearance.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A positioning structure of a frame welding assembly for a metal product, the metal product being a holding plate or a holding basket made of metal mesh, wherein it comprises:
multiple bodies (10) including multiple raised faces (14) and multiple slots (13) which are stamped on peripheral sides of the body (10), the body (10) being folded in a square shape;
wherein a slit is defined between two adjacent body portions;
wherein each of the two adjacent body portions defines a connection side,
wherein the connection sides have multiple recesses (15) and multiple protrusions (16) thereon, wherein the two adjacent body portions are connected together so that the multiple recesses (15) retain with the multiple protrusions (16) individually, wherein the connection sides are welded to each other by high-frequency welding, so that the multiple protrusions (16) partially melt and fill into the slit and wherein a height of each of the multiple protrusions (16) is more than a depth of each of the multiple recesses (15).

2. The positioning structure as claimed in claim 1,
wherein the body (10) includes a first peripheral rib (11) formed on a first end thereof, a second peripheral rib (12) formed on a second end of the body (10), and multiple notches (17) and multiple projections (18) formed on the first peripheral rib (11) and the second peripheral rib (12) at the connection sides of the two adjacent body portions.

3. The positioning structure as claimed in claim 1,
wherein the multiple recesses (15) and the multiple protrusions (16) are alternatively formed on the multiple raised faces (14) or the multiple slots (13) provided on the peripheral sides of the connection sides of the two adjacent body portions.

## Patentansprüche

1. Positionierungsstruktur einer Rahmenschweißanordnung für ein Metallprodukt, wobei das Metallprodukt eine Halteplatte oder ein Haltekorb ist, der aus Metallgewebe hergestellt ist, wobei sie umfasst:
mehrere Körper (10), die mehrere erhöhte Flächen (14) und mehrere Einschnitte (13) umfassen, die an peripheren Seiten des Körpers (10) eingeprägt sind, wobei der Körper (10) in einer quadratischen Form gefaltet ist,
wobei ein Schlitz zwischen zwei benachbarten Körperabschnitten definiert ist,
wobei jeder der zwei benachbarten Körperabschnitte eine Verbindungsseite definiert,
wobei die Verbindungsseiten mehrere Aussparungen (15) und mehrere Vorsprünge (16) daran aufweisen, wobei die zwei benachbarten Körperabschnitte miteinander so verbunden sind, dass die mehreren Aussparungen (15) die mehreren Vorsprünge (16) individuell halten, wobei die Verbindungsseiten durch Hochfrequenzschweißen miteinander verschweißt werden, so dass die mehreren Vorsprünge (16) teilweise schmelzen und den Schlitz füllen und wobei eine Höhe von jedem der mehreren Vorsprünge (16) größer ist als eine Tiefe von jeder der mehreren Aussparungen (15)

2. Positionierungsstruktur gemäß Anspruch 1,
bei welcher der Körper (10) eine erste periphere Rippe (11), die an einem ersten Ende davon ausgebildet ist, eine zweite periphere Rippe (12), die an einem zweiten Ende des Körpers (10) ausgebildet ist und mehrere Einkerbungen (17) und mehrere Vorsprünge (18) umfasst, die an der ersten peripheren Rippe (11) und der zweiten peripheren Rippe (12) an den Verbindungsseiten der zwei benachbarten Körperabschnitte ausgebildet sind.

3. Positionierungsstruktur gemäß Anspruch 1 ,
bei welcher die mehreren Aussparungen (15) und die mehreren Vorsprünge (16) alternativ an den mehreren erhöhten Flächen (14) oder den mehreren Einschnitten (13) ausgebildet sind, die an den peripheren Seiten der Verbindungsseiten der zwei benachbarten Körperabschnitte bereitgestellt sind.

## Revendications

1. Structure de positionnement d'un ensemble de soudage de cadre pour un produit métallique, le produit métallique étant une plaque de retenue ou un panier de retenue réalisé en treillis métallique, dans laquelle elle comprend:
de multiples corps (10) incluant de multiples faces relevées (14) et de multiples fentes (13) qui sont estampées sur des côtés périphériques du corps (10), le corps (10) étant plié dans une forme carrée;
dans laquelle une fente est définie entre deux portions de corps adjacentes;
dans laquelle chacune des deux portions de corps adjacentes définit un côté de raccordement, dans laquelle les côtés de raccordement présentent de multiples évidements (15) et de multiples saillies (16) sur ceux-ci, dans laquelle les deux portions de corps adjacentes sont raccordées ensemble de sorte que les multiples évidements (15) se retiennent avec les multiples saillies (16) individuellement, dans laquelle les côtés de raccordement sont soudés l'un à l'autre par soudage à haute fréquence de sorte que les multiples saillies (16) se fondent partiellement et remplissent la fente et dans laquelle une hauteur de chacune des multiples saillies (16) est supérieure à une profondeur de chacun des multiples évidements (15).

2. Structure de positionnement selon la revendication 1, dans laquelle le corps (10) inclut une première nervure périphérique (11) formée sur une première extrémité de celui-ci, une seconde nervure périphérique (12) formée sur une seconde extrémité du corps (10), et de multiples encoches (17) et de multiples saillies (18) formées sur la première nervure périphérique (11) et la seconde nervure périphérique (12) au niveau des côtés de raccordement des deux portions de corps adjacentes.

3. Structure de positionnement selon la revendication 1, dans laquelle les multiples évidements (15) et les multiples saillies (16) sont formés en alternance sur les multiples faces relevées (14) ou les multiples fentes (13) prévues sur les côtés périphériques des côtés de raccordement de deux portions de corps adjacentes.
